# EUROPÄISCHE PATENTSCHRIFT

(11) **EP 0 911 549 B1**
(45) Veröffentlichungstag und Bekanntmachung des Hinweises auf die Patenterteilung: **19.12.2001**
(21) Anmeldenummer: 98119971.4
(22) Anmeldetag: 22.10.1998
(51) Int. Cl.: F16H 59/08, F16H 61/22

(54) **Schalt- bzw. Wählhebelanordnung für hilfskraftbetätigte Wechselgetriebe von Kraftfahrzeugen**
Shift or select lever for servo assisted change speed transmissions for vehicles
Sélecteur de vitesse pour boite de vitesses robotisée de véhicule automobile

(30) Priorität: 27.10.1997 DE 19747333
(43) Veröffentlichungstag der Anmeldung: 28.04.1999
(73) Patentinhaber: Ford Global Technologies, Inc., A subsidiary of Ford Motor Company, Dearborn, Michigan 48126 (US)
(72) Erfinder: Flintrop, Thomas, 51061 Köln (DE); Kniesburges, Stefan, 50259 Pulheim (DE); Quast, Jörg-Rainer, 50858 Köln (DE); Krauss, Christian, 50735 Köln (DE)
(74) Vertreter: Messulam, Alec Moses

(56) Entgegenhaltungen:
- EP-A- 0 582 505
- WO-A-90/04225
- DE-A- 3 717 674
- US-A- 4 442 730
- US-A- 5 195 387
- US-A- 5 527 234

## Beschreibung

Die Erfindung bezieht sich auf eine Schalt- bzw. Wählhebelanordnung für hilfskraftbetätigte Wechselgetriebe von Kraftfahrzeugen der im Oberbegriff des Patentanspruchs 1 erläuterten Art.

Aus der JP 63-23414 A ist eine Wählhebelanordnung für ein automatisches Wechselgetriebe von Kraftfahrzeugen bekannt, bei der ein Schalthebel in zumindest zwei benachbarten Schaltstellungen verlagerbar ist, wobei er in einer dieser Schaltstellungen eine manuell bestimmte Schaltung des hilfskraftbetätigten Wechselgetriebes bewirkend nach Art einer Tipschaltung in entgegengesetzten Richtungen, jeweils in seine Ruhelage zurückkehrend betätigbar ist und in der anderen der Schaltstellungen die einer Automatikfunktion des automatischen Wechselgetriebes zugeordneten Schaltstellungen wie Rückwärtsgang, Neutral und Drive einnehmen kann.

Die bekannte Schalt- bzw. Wählhebelanordnung weist zusätzliche Druckknöpfe auf, die eine übersteuernde Funktion für bestimmte Funktionsweisen bewirken.

Die bekannte Schalt- bzw. Wählhebelanordnung läßt bereits durch ihr Aussehen vermuten, daß es hierbei um ein automatisches Wechselgetriebe geht, das gesteuert, bzw. manuell geschaltet werden kann.

In der US 5527234 A ist eine Schalthebelanordnung gemäß dem Oberbegriff des Anspruchs 1 beschrieben, bei der ein Schalthebel in einer Schaltstellung zur manuell bewirkten Schaltung des Wechselgetriebes nach Art einer Tipschaltung in zwei entgegengesetzten Richtungen jeweils rückkehrend in seine Ruhestellung bewegbar angeordnet ist. Aus dieser Schaltstellung ist der Schalthebel in eine Schaltstellung für den Automatikbetrieb schaltbar, wobei diese Schaltstellung die gleiche mechanische Schalthebelfunktion aufweist wie die Schaltstellung für die manuelle Schaltung, allerdings wird im Automatikbetrieb mit der Tipschaltung nur der höchsmögliche Gang festgelegt. Aus der Automatikstellung ist der Schalthebel in die Neutralstellung schaltbar, und von dort in die Schaltstellung für den Rückwärtsgang, wobei die Schaltrichtung sich zwischen den beiden letzen Schaltstellungen ändert, da zusätzlich aus der Neutralstellung in eine Parkstellung geschaltet werden kann. Auf diese Weise sind die drei Schaltstellungen von Manuell, Neutral und Rückwärts zueinander in Form eines Dreiecks angeordnet.

Diese Anordnung ist durch die vielen Schaltgassen nicht sofort intuitiv zu bedienen und erfordert zur exakten Führung des Schalthebels in den verschiedenen, abgewinkelten Schaltgassen einen hohen mechanischen Aufwand.

Aus der US5195387 schließlich ist eine Schalthebelanordnung bekannt, bei der in den Schaltstellungen Rückwärts, Automatik und Manuell mittels Tipschaltung Gänge selektiert werden können. Eine manuell betätigbare Entriegelung am Schalthebel verhindert den unkontrollierten Wechsel zwischen den Schaltstellungen.

Die Aufgabe der Erfindung ist, eine Schalt- bzw. Wählhebelanordnung für hilfskraftbetätigte Wechselgetriebe von Kraftfahrzeugen zu schaffen, daß eine von der herkömmlichen, für automatische Wandlergetriebe bekannten Schaltschema-Anordnung der wählbaren Schaltstellungen derart abweicht, daß schon durch bloßes Betrachten der Schalt- bzw. Wählhebelanordnung nicht der Eindruck erweckt wird, es handelt sich hierbei um ein automatisches Wandlergertriebe.

Gemäß der Erfindung wird diese Aufgabe gelöst, indem bei einer Schalt- bzw. Wählhebelanordnung für hilfskraftbetätigte Wechselgetriebe von Kraftfahrzeugen, der im Oberbegriff des Patentanspruchs 1 erläuterten Art, die im Kennzeichenteil des Patentanspruchs 1 aufgezeigten Merkmale vorgesehen werden.

Dadurch, daß der Schalthebel aus der einen, die Tipschaltung bereitstellenden Schaltstellung in zwei auf den Ecken eines Dreiecks liegenden Schaltstellungen bewegbar ist, von denen die eine Schaltstellung einen Rückwärtsgang R betätigt und die andere Schaltstellung einer Neutralstellung N entspricht, wobei eine manuell betätigbare Entriegelung vorgesehen ist, die jeweils betätigt werden muß, um von einer an den Ecken des Dreiecks liegenden Schaltstellung zur anderen Schaltstellung zu wechseln, wird eine unverwechselbare Schaltschema-Anordnung von besonderem Charakter bereitgestellt.

In der mit M bezeichneten Schaltstellung wird der Schalthebel federbelastet fixiert und kann nach Art einer Tipschaltung nach vorne "+" und nach hinten "-" jeweils in seine Ruhelage zurückkehrend betätigt werden.

Bei einer anderen Ausführungsform kann die manuell betätigbare Schaltsperre nur für zwei der Seiten des Dreieckes vorgegeben sein, wohingegen die dritte Seite z.B. einen Wechsel zwischen der Stellung M für die manuelle Schaltung zur Stellung R für den Rückwärtsgang freigegeben ist, um beim Einparken eines Fahrzeuges oder beim Herausschaukeln eines Fahrzeuges aus schwierigen Fahrsituationen z.B. im Schnee oder Matsch ein wechselweises Betätigen zu erleichtern.

Zusätzlich zu der Schalt- bzw. Wählhebelanordnung sind eine Anzahl von Druckknöpfen vorgesehen, die eine gewisse Übersteuerung der Funktion der Schaltungen bewirken, um z.B. für den Automatikmodus eine Normalfunktion und eine Winterfunktion bzw. eine Schaltfunktion mit Auslegung auf sportliche Durchführung der Schaltungen bzw. eine Auslegung auf wirtschaftliche Durchführung der Schaltungen bereit zu stellen.

Die Erfindung wird anhand einer in der Zeichnung gezeigten Schaltschema-Anordnung näher erläutert. Es zeigt:
- Fig. 1: eine Draufsicht auf die Schaltschema-Anordnung gemäß der Erfindung;
- Fig. 2: eine Seitenansicht eines möglichen Schalthebels und
- Fig. 3: eine Aufstellung über die Bewegungsmöglichkeiten des Schalthebels mit der Angabe, bei welcher dieser Bewegungen die manuell betätigbare Entriegelung gehandhabt werden muß oder nicht.

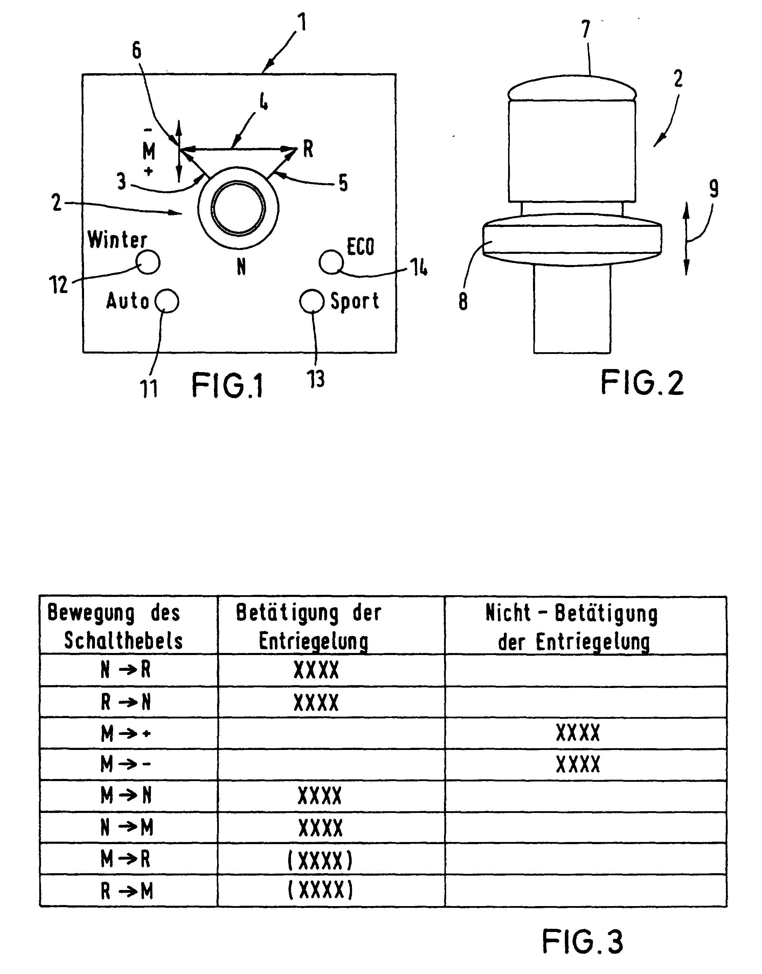

In Fig. 1 ist durch ein Quadrat eine Schaltkonsole 1 angedeutet, auf der ein Schalthebel 2 entlang eines durch Doppelpfeile 3, 4 und 5 entlang eines Dreiecks zwischen Schaltstellung N, M und R bewegbar ist, wobei der Schalthebel 2 in der Schaltstellung M nach Art einer durch den Doppelpfeil 6 angedeuteten Tipschaltung nach "+" oder "-" jeweils in seine Ruhelage zurückkehrend bewegbar ist.

Der Schalthebel 2 ist in Fig. 1 schematisch dargestellt und besteht aus einem Schaltknauf 7 von dem aus mit den Fingern eine manuelle Entriegelung 8 in der durch den Doppelpfeil 9 angedeuteten Weise betätigbar ist, um eine Verriegelung in der jeweils gewählten Schaltstellung N, R oder M aufzuheben, um eine Bewegung in eine der anderen Schaltstellungen zu ermöglichen.

Auf der Schaltkonsole 1 sind Druckknöpfe 11, 12, 13 und 14 angeordnet, die bestimmten Schaltfunktionen zugeordnet sind und zum Teil einzeln oder in Kombination wirksam werden können.

So bestimmt der Druckknopf 11 einen Automatikmodus des hilfskraftbetätigten Wechselgetriebes, während der Druckknopf 12 einen eben solchen Automatikmodus nur für den Winterbetrieb bewirkt, in dem in an sich bekannter Weise in einem höheren Gang angefahren wird. Die Druckknöpfe 13 und 14 sind hierbei vorgesehen, um abwechselnd im Zusammenwirken mit dem Druckknopf 11 für den Automatikbetrieb zu treten, so daß der gewählte Automatikbetrieb einmal durch eine sportlichere Auslegung und das andere Mal durch eine komfortbetontere, wirtschaftlichere Auslegung der Schaltvorgänge gekennzeichnet ist.

In der Fig. 3 ist eine Tabelle mit den möglichen Bewegungen des Schalthebels 2 zwischen den Schaltstellung N, M und R aufgezeigt, wobei durch ein "X" in der Spalte Entriegelung benutzen bzw. in der Spalte Entriegelung nicht benutzen angegeben ist, ob für die aufgezeigte Bewegung ein Betätigen der Entriegelung 8 erforderlich ist.

Es sind hierbei je nach der gewählten mechanischen konstruktiven Lösung unterschiedliche Auslegungen denkbar, abhängig von der entsprechend präzisen Führung des Schalthebels entlang der Seiten des dreieckigen Schaltschemas.

Die in der Tabelle in Klammern gesetzten "X" sollen aufzeigen, daß auch bei einer Bewegung des Schalthebels 2 aus einer der Schaltpositionen in die nächste auf eine Bedienung der Entriegelung verzichtet werden kann, wenn die mechanisch konstruktive Lösung für die Führung und Rastung des Schalthebels dies ohne die Gefahr einer Fehlbedienung zuläßt.

Grundsätzlich kann hierbei die Lage der Schaltstellungen auf den Ecken des Dreiekkes verschieden angeordnet werden, um eine der Schaltstellungen, z.B. die Schalstellung M mit der Betätigungsrichtung gemäß Pfeil 6, in eine bevorzugte Lage zu bringen.

## Patentansprüche

1. Schalt- bzw. Wählhebelanordnung für hilfskraftbetätigte Wechselgetriebe von Kraftfahrzeugen, bei der ein Schalthebel (2) in zumindest zwei benachbarten Schaltstellungen verlagerbar ist, wobei er in einer dieser Schaltstellungen (6) zur manuell bewirkten Schaltung des Wechselgetriebes nach Art einer Tipschaltung in zwei entgegengesetzten Richtungen jeweils rückkehrend in seine Ruhestellung bewegbar angeordnet ist, der Schalthebel (2) neben der an einer Ecke eines Dreicks angeordneten, die Tipschaltung (M) bereitstellenden Schaltstellung (M) zwei auf den anderen Ecken des Dreiecks liegende Schaltstellungen (N und R) aufweist, von denen die eine Schaltstellung (R) einen Rückwärtsgang betätigt und die andere Schaltstellung (N) einer Neutralstellung entspricht,
**dadurch gekennzeichnet, daß** eine manuell betätigbare Entriegelung (8) vorgesehen ist, um einen Wechsel zwischen Schaltstellungen zu kontrollieren, und daß
der Schalthebel (2) direkt von der auf einem Eck des Dreiecks angeordneten, die Tipschaltung bereitstellenden Schaltstellung (M) in die auf einem anderen Eck des Dreiecks angeordneten Schaltstellung (R) für den Rückwärtsgang ohne Umweg über die Neutralstellung (N) schaltbar ist.

2. Schalt- bzw. Wählhebelanordnung nach Anspruch 1,
**dadurch gekennzeichnet, daß**
- die manuell betätigbare Entriegelung (8) nur für bestimmte Bewegungen (3 und 5) des Schalthebels (2) zu bedienen ist, wohingegen eine Bewegung (4) ohne Betätigen der Entriegelung (8) möglich ist.

3. Schalt- bzw. Wählhebelanordnung nach den Ansprüchen 1 und 2,
**dadurch gekennzeichnet, daß**
- zusätzlich zu dem zwischen den drei Schaltstellungen (N, M und R) bewegbaren Schalthebel (2) Druckknöpfe (11, 12, 13 und 14) vorgesehen sind, die einzeln oder in Kombination eine bestimmte unterschiedliche Funktionsweise des automatisch schaltbaren Wechselgetriebes bewirken.

4. Schalt- bzw. Wählhebelanordnung nach Anspruch 1,
**dadurch gekennzeichnet, daß**
- die Lage der Schaltstellungen (N, M und R) an den Ecken des Dreiecks untereinander austauschbar angeordnet werden kann und ebenso die Ausrichtung der Eckpunkte des Dreieckes nach vome, hinten oder nach den Seiten veränderbar ist.

## Claims

1. Shift or select lever for servo-assisted change speed transmissions of vehicles, wherein a shift lever (2) can be displaced in at least two neighbouring shift positions, wherein the shift lever (2) in one of these shift positions (6) for the manually effected shifting of the change speed transmission in the manner of a tip shift can be positioned in such a way that it can be moved in two contrary directions respectively returning to its position of rest, the shift lever (2) besides its shift position (M) positioned on one corner of the triangle and providing the tip shift (M) has two shift positions (N and R) lying on the other corners of the triangle, of which one shift position (R) activates a reverse gear and the other shift position (N) corresponds to a neutral position,
**characterised in that** a manually activated unlocking (8) is provided, in order to control a change between shift positions and **in that** the shift lever (2) can be shifted directly from the shift position (M) providing the tip shift and positioned on one corner of the triangle into the shift position (R) for reverse gear positioned on another corner of the triangle without going via the neutral position (N).

2. Shift or select lever according to Claim 1
**characterised in that**
- the manually activated unlocking (8) is only to be used for certain movements (3 and 5) of the shift lever (2), whereas a movement (4) is possible without activation of the unlocking (8).

3. Shift or select lever according to Claims 1 and 2
**characterised in that**
- in addition to the shift lever (2) moveable between the three shift positions (N, M and R) there are push buttons (11, 12, 13 and 14), which individually or in combination bring about a determined different mode of operation of the automatically shiftable change speed transmissions.

4. Shift or select lever according to Claim 1
**characterised in that**
- the position of the shift positions (N, M and R) on the corners of the triangle can be exchanged between themselves, and likewise the alignment of the corner points of the triangle can be altered forwards, backwards or to the sides.

## Revendications

1. Dispositif à levier de commutation ou de sélection pour boîtes de vitesses assistées de véhicules automobiles, dans lequel un levier sélecteur (2) peut être déplacé dans au moins deux positions de commutation voisines en étant disposé, dans l'une de ces positions de commutation (6), en vue de la commutation manuelle de la boîte de vitesses, avec mobilité dans deux directions opposées à la manière d'un circuit inversable, en retournant respectivement à sa position de repos ; et ledit levier sélecteur (2) présentant, outre la position de commutation (M) située sur un coin d'un triangle et procurant le circuit inversable (M), deux positions de commutation (N et R) situées sur les autres coins du triangle, parmi lesquelles l'une (R) des positions de commutation actionne une marche arrière et l'autre position de commutation (N) correspond à une position neutre,
**caractérisé par le fait**
**qu'**un déverrouillage (8), actionnable manuellement, est prévu pour contrôler une variation entre positions de commutation ; et
**que** le levier sélecteur (2) peut être directement commuté, sans transiter par la position neutre (N), de la position de commutation (M) située sur un coin du triangle et procurant le circuit inversable, à la position de commutation (R) située sur un autre coin du triangle et affectée à la marche arrière.

2. Dispositif à levier de commutation ou de sélection selon la revendication 1,
**caractérisé par le fait que**
- le déverrouillage (8), actionnable manuellement, doit être manoeuvré uniquement pour des mouvements déterminés (3 et 5) du levier sélecteur (2), tandis qu'un mouvement (4) sans actionnement dudit déverrouillage (8) est en revanche possible.

3. Dispositif à levier de commutation ou de sélection selon les revendications 1 et 2,
**caractérisé par le fait que**
- des boutons-poussoirs (11, 12, 13 et 14), prévus en plus du levier sélecteur (2) mobile entre les trois positions de commutation (N, M et R), provoquent, individuellement ou en combinaison, un mode de fonctionnement différent déterminé de la boîte de vitesses commutable automatiquement.

4. Dispositif à levier de commutation ou de sélection selon la revendication 1,
**caractérisé par le fait que**
- l'emplacement des positions de commutation (N, M et R) est interchangeable aux coins du triangle, de même que l'orientation des coins dudit triangle peut être modifiée vers l'avant, vers l'arrière ou vers les côtés.
